# EUROPÄISCHE PATENTSCHRIFT

(11) **EP 1 619 803 B1**
(45) Veröffentlichungstag und Bekanntmachung des Hinweises auf die Patenterteilung: **05.11.2008**
(21) Anmeldenummer: 05106653.8
(22) Anmeldetag: 20.07.2005
(51) Int. Cl.: H04B 1/04

(54) **Vorrichtung und Verfahren zur Vermeidung von Störsignalen beim Einschalten**
Apparatus and method for preventing transmission of spurious signals at switch on
Appareil et procédé pour éviter la transmission des signaux parasites pendant la mise sous tension

(30) Priorität: 23.07.2004 DE 102004035739
(43) Veröffentlichungstag der Anmeldung: 25.01.2006
(73) Patentinhaber: SIEMENS AKTIENGESELLSCHAFT, 80333 München (DE)
(72) Erfinder: Fichtner, Norbert, 84069, Schierling (DE); Ott, Hans, 93053, Regensburg (DE)

(56) Entgegenhaltungen:
- JP-A- 251 943
- JP-A- 2000 286 744
- US-A- 116 076
- US-A- 6 034 999

## Beschreibung

Die vorliegende Erfindung betrifft eine Vorrichtung zur Signalübertragung mit einer Sendeeinrichtung zum Senden von Signalen und zur Ausgabe einer Sendestartinformation zu Beginn eines Sendebetriebs. Darüber hinaus betrifft die vorliegende Erfindung ein entsprechendes Verfahren zur Signalübertragung.

In der Funktechnik werden für bestimmte Anwendungen fest zugeordnete Frequenzbereiche/-bänder vergeben. Die Frequenzbänder sind im Wesentlichen definiert durch die Bandgrenzen, aus denen sich die Bandbreite ergibt, die maximal zulässige Sendeleistung, den Duty-Cycle (Anteil des aktiven Sendens eines Teilnehmers) und einer eventuellen Kanaleinteilung des gesamten Bands. In den zugehörigen Vorschriften, wie z.B. der ETSI EN300 220-1/-2 für SRD (Short Range Devices), ist genau angegeben, welche Leistungsgrenzen für Signale außerhalb des genutzten Frequenzbands zulässig sind. Damit ist definiert, welche Störanteile ein Sender höchstens aufweisen darf. Letztlich wird hierdurch die parallele, zeitgleiche Nutzung verschiedener Frequenzbereiche gewährleistet.

Derartige Anforderungen gelten beispielsweise bei der Nutzung des ISM-Bands (Industry Science and Medical) von 868,0 MHz bis 868,6 MHz. Dabei muss das Nutzsignal innerhalb eines Bands von 600 kHz liegen.

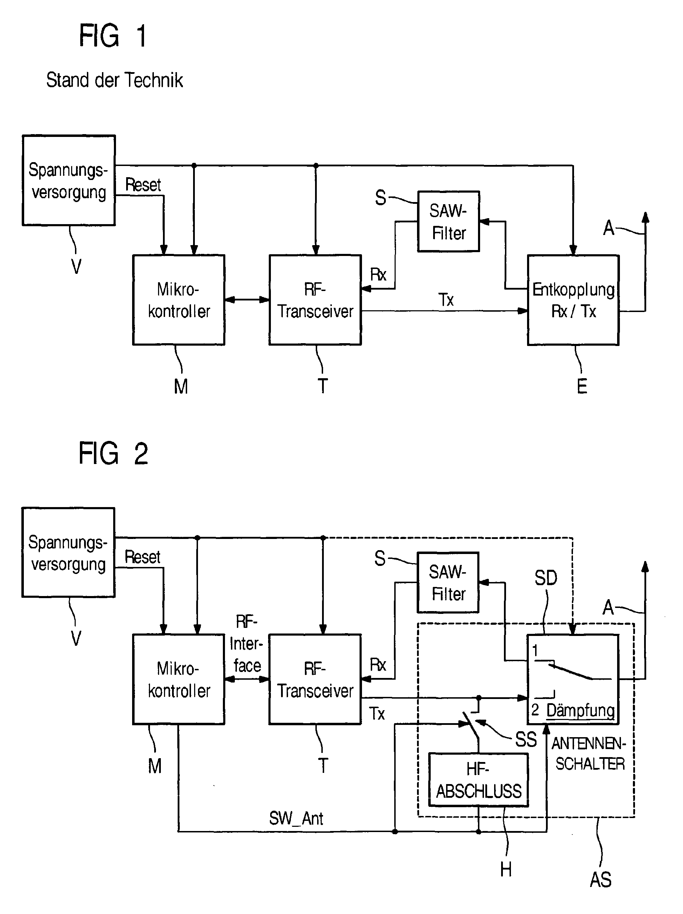

Bei der Verwendung eines bidirektionalen Funkgeräts insbesondere bei Short Range Devices, in einem gewünschten Frequenzband sind die oben genannten Vorschriften einzuhalten. Ein derartiges bidirektionales Funkgerät ist in der Regel entsprechend dem vereinfachten Blockschaltdiagramm von FIG 1 aufgebaut. Kernstück ist ein RF-Transceiver T, der von einem Mikro-Kontroller M gesteuert wird. Der RF-Transceiver T besitzt einen Eingang für einen Empfangszweig Rx und einen Ausgang für einen Sendezweig Tx. Über ein Entkopplungselement E ist eine Antenne A an den RF-Transceiver T angeschlossen. Das Kopplungselement dient dabei zum Schalten der Antenne A an den Empfangszweig Rx oder den Sendezweig Tx. In den Empfangszweig Rx ist ein SAW-Filter S geschaltet, der das Empfangssignal filtert. Über eine Spannungsversorgung V werden die aktiven Elemente wie der Mikrokontroller M, der RF-Transceiver T und das Entkopplungselement E mit Spannung versorgt. Darüber hinaus kann der Mikro-Kontroller M über die Spannungsversorgung in einen definierten Zustand zurückgesetzt werden.

Beim Einschalten des Sendebetriebs des in FIG 1 wiedergegebenen bidirektionalen Funkgeräts ergeben sich bekanntermaßen unzulässige Störanteile. Der Grund hierfür liegt in der Schaltantwort des RF-Transceivers T.

Aus der Patentschrift US 6, 034, 999 A ist ein Sender bekannt, der zur Ausgabe eines Initial-Burst-Signals geeignet ist. Eine Steuereinheit schaltet einen Schalter auf eine Leerseite (dummy), so dass der Ausgang des Leistungsverstärkers nicht an die Antenne angeschlossen ist. Das Einschaltsignal des Leistungsverstärkers wird damit nicht nach außen gesendet.

Weiterhin beschreibt die Druckschrift JP 2000 286744 A eine Sendeempfangsschaltung mit einer Senderdiode, die in Serie zwischen eine Sendeeinheit und eine Antenne geschaltet ist, und einer Empfängerdiode, die in Serie zwischen die Antenne und einer Empfangseinheit geschaltet ist. Die Senderdiode erhält eine Sperrvorspannung in einem vorrangigen Sendeabschnitt, wobei der Betrieb einer phase-locked-loop vor dem Senden gestartet wird, um einen Abschaltzustand zu erreichen, und sie erhält eine Durchlassspannung für die Sendezeit, um einen Einzustand zu erreichen.

Die Druckschrift JP 00251943 A offenbart ein Sendeleistungssteuergerät. Zu Beginn eines Sendevorgangs wird eine Sendestartinformation ausgegeben. Eine Dämpfungseinheit unterdrückt das Ausgangssignal für eine vorbestimmte Zeit nach der Sendestartinformation.

Darüber hinaus ist aus der Druckschrift US 2004/0116076 A1 eine Sendeempfangsschaltung einschließlich einer Antenne bekannt, wobei ein Sendesignal in Abhängigkeit eines Sendesteuersignals ausgegeben wird. Ein Schalter überträgt das Sendesignal zu der Antenne in Abhängigkeit von einem Schaltsignal.

Die Aufgabe der vorliegenden Erfindung besteht somit darin, das Störverhalten einer Sendeeinrichtung zu Beginn des Sendens zu verbessern.

Erfindungsgemäß wird diese Aufgabe gemäß Anspruch 1 gelöst durch eine Vorrichtung zur Signalübertragung mit einer Sendeeinrichtung einen Voltage Controlled Oscillator aufweist, zum Senden von Signalen und zur Ausgabe einer Sendestartinformation zu Beginn eines Sendebetriebs, einem Leistungsverstärker zur Leistungsverstärkung eines Sendesignals und einer Antenne, sowie umfassend eine Dämpfungseinheit, zwischen dem Leistungsverstärker und der Antenne, deren Dämpfung in Abhängigkeit der Sendestartinformation für eine vorbestimmte Zeitdauer einschaltbar ist, wobei die Zeitdauer ausreicht, um die durch die Einschaltströmungen des Leistungsverstärkers verursachte ungünstige Beeinflussung des Voltage Controlled Oscillators abklingen zu lassen.

Darüber hinaus ist nach Anspruch 7 erfindungsgemäß vorgesehen ein Verfahren zur Signalübertragung durch Ausgeben einer Sendestartinformation zu Beginn eines Sendebetriebs, Senden eines Sendesignals durch eine Sendeeinrichtung, die einen Voltage Controlled Oscillator aufweist, und Verstärken des Sendesignals durch einen Leistungsverstärker sowie Dämpfen des Sendesignals nach dem Verstärken durch eine Dämpfungseinheit in Abhängigkeit von der Sendestartinformation für eine vorbestimmte erste Zeitdauer, wobei die Zeitdauer ausreicht, um die durch die Einschaltstörungen des Leistungsverstärkers verursachte ungünstige Beeinflussung des Voltage Controlled Oscillators abklingen zu lassen.

Der Erfindung liegt die Erkenntnis zugrunde, dass die Störungen zu Beginn des Sendebetriebs einer Sendeeinrichtung zum einen darauf zurückzuführen sind, dass die häufig für die Frequenzregelung verwendeten PLLs (Phase Locked Loop) eine bestimmte Zeit für das Einschwingen benötigen, und zum anderen das "sprungartige" Einschalten der Sendestufe bzw. des PA (Power Amplifier) den VCO (Voltage Control Oscillator) zur Erzeugung der Sendefrequenz ungünstig beeinflusst. Welche Ursache auch immer für die Frequenzabweichung verantwortlich ist, das Ergebnis sind auf alle Fälle Signale außerhalb des zulässigen Frequenzbereichs mit einem zu hohen Sendepegel. Das Problem der verstimmten PLLs kann nun dadurch gelöst werden, dass die Frequenz des PLLs für den Sendebetrieb umgeschaltet und anschließend so lange gewartet wird, bis das PLL eingeschwungen ist. Daraufhin wird die Sendestufe, d.h. der Power Amplifier PA eingeschaltet. Um nun zu verhindern, dass durch das Einschalten der Sendestufe hohe Störanteile ausgesendet werden, muss das anfängliche Sendesignal der Sendestufe entsprechend gedämpft werden.

Die Sendeeinrichtung kann entsprechend einer Ausgestaltung der vorliegenden Erfindung auch zum Empfang von Signalen ausgelegt sein. Vorzugsweise weist die erfindungsgemäße Vorrichtung dann eine Schalteinrichtung auf, welche mit der Sendeeinrichtung jeweils über einen Sendezweig und einen Empfangszweig verbunden ist, wobei die Schalteinrichtung ihren Ausgang an den Sendezweig oder Empfangszweig schaltet. Dabei kann der Ausgang der Schalteinrichtung an eine Antenne angeschlossen sein. Auf diese Weise ist bidirektionale, drahtlose Signalübertragung möglich.

Vorzugsweise ist die Dämpfungseinrichtung in die Schalteinrichtung integriert. Dadurch lässt sich der Aufbau des Sende- oder Transceiver-Systems einfacher gestalten.

An die Sendeeinrichtung kann ferner ein zuschaltbares HF-Abschlusselement angeschlossen sein. Dadurch liegt stets eine geeignete Anpassung vor, auch wenn sich der Transceiver im Empfangsbetrieb befindet, und der HF-Abschluss daher an den Sendezweig geschaltet ist.

Die Schalteinrichtung und das HF-Abschlusselement können ferner einen gemeinsamen Steueranschluss besitzen. Dies ist insofern günstig, da beide Bauelemente gleichzeitig geschaltet werden müssen. Wenn die Schalteinrichtung die Antenne an den Empfangszweig schaltet, ist der HF-Abschluss zuzuschalten, während wenn die Schalteinrichtung die Antenne an den Sendezweig schaltet, muss der HF-Abschluss vom Sendezweig abgeschaltet sein. Dabei kann es auch günstig sein, wenn die Schalteinrichtung und der HF-Abschluss in einem Gerät zusammengefasst sind.

Bei einer besonders bevorzugten Ausgestaltung des erfindungsgemäßen Verfahrens zur Signalübertragung wird der Sendebetrieb nach dem Ausgeben der Sendestartinformation in nachstehender Reihenfolge vorbereitet:
Anschalten der Dämpfungseinheit, Einschalten eines Sendefrequenzgenerators, Einschalten einer Ausgangsstufe der Sendeeinrichtung, sobald die Sendefrequenz stabil ist oder nach einer vorbestimmten zweiten Zeitdauer, und Abschalten der Dämpfungseinheit nach der vorbestimmten ersten Zeitdauer. Dadurch wird nicht nur gewährleistet, dass das PLL eingeschwungen ist, sondern auch Einschaltstörungen des PA in geeigneter Weise gedämpft werden.

Die vorliegende Erfindung ist anhand der beigefügten Zeichnungen näher erläutert, in denen zeigen:
- FIG 1: ein Blockschaltdiagramm eines bidirektionalen Funkgeräts entsprechend dem Stand der Technik; und
- FIG 2: ein Blockschaltbild eines erfindungsgemäßen bidirektionalen Funkgeräts.

Das nachfolgend näher geschilderte Ausführungsbeispiel stellt eine bevorzugte Ausführungsform der vorliegenden Erfindung dar. Das in FIG 2 wiedergegebene Blockschaltbild eines der vorliegenden Erfindung entsprechenden bidirektionalen Funkgeräts, hier beispielhaft als Short Range Device für die Installationstechnik ausgeführt, entspricht im Wesentlichen dem aus dem Stand der Technik bekannten nach FIG 1. Hinsichtlich der Komponenten Spannungsversorgung V, Mikro-Kontroller M, RF-Transceiver T, SAW-Filter S und Antenne A sei daher auf die Beschreibung von FIG 1 hingewiesen. Als Entkopplungselement wird hier jedoch ein Antennenschalter AS verwendet. Dieser besteht im einfachsten Fall aus einem steuerbaren Schaltelement mit Dämpfung SD. In einer Schaltstellung 1 ist die Antenne A über den Empfangszweig Rx mit dem RF-Transceiver T verbunden. In einer Schaltstellung 2 ist die Antenne A mit dem RF-Transceiver T über den Sendezweig Tx verbunden. Eine in das Schaltelement SD integrierte Dämpfung wird über eine Steuerleitung SW_Ant von dem Mikro-Kontroller M mit einer Sendestartinformation aktiviert. Für das Schaltelement SD ist daher ein Antennenschalter mit ausreichender Dämpfung auszuwählen. Erst eine vorgegebene Zeit nach dem Einschalten der Sendestufe des RF-Transceivers T wird die Dämpfung wieder deaktiviert.

Der Antennenschalter kann diskret oder als IC ausgestaltet sein. Ferner kann anstelle des Antennenschalters als Entkopplungselement auch ein LC-Netzwerk verwendet werden. In diesem Fall lässt sich ebenso eine erfindungsgemäße Dämpfung einsetzen. Sie ist vor die Antenne oder vorzugsweise in den Sendezweig Tx zu platzieren.

In der weiterentwickelten Ausgestaltung gemäß FIG 2 ist der Antennenschalter AS zusätzlich mit einem HF-Abschluss H versehen, der über einen steuerbaren Schalter SS an den Sendezweig Tx angeschlossen werden kann. Die Steuerung des Schalters SS sowie des HF-Abschlusses H erfolgt wiederum durch den Mikro-Kontroller M. Damit kann nicht nur die Dämpfung (hier in dem dämpfenden Schaltelement SD), sondern auch der HF-Abschluss H unabhängig vom Power-Amplifier des RF-Transceivers T ein- und ausgeschaltet werden. Der Zweck des HF-Abschlusses H liegt einerseits in der Verbesserung der Dämpfung und andererseits im definierten Betrieb der Sendestufe, wenn der Antennenschalter noch im Empfangsmodus steht.

Der Antennenschalter für das Senden wird erst, nachdem die Sendefrequenz stabil ist, durchgeschaltet. Es ergibt sich damit folgende Reihenfolge beim Schalten des RF-Transceivers T in den Sendebetrieb: Der Antennenschalter AS sperrt zunächst das Sendesignal, da sich der RF-Transceiver im Empfangsmodus befindet; dabei ist die Dämpfung im Senderzweig aktiv; sodann wird das PLL angeschaltet bzw. umgeschaltet und eine vorbestimmte (zweite) Dauer gewartet bis die Sendefrequenz stabil ist; daraufhin wird die Sendestufe bzw. der Power Amplifier des Transceivers T eingeschaltet; schließlich wird die Dämpfung nach einer vorbestimmten (ersten) Zeitdauer ab dem Einschalten der Sendestufe ausgeschaltet und der Antennenschalter in den Sendemodus geschaltet, so dass er das Sendesignal zur Antenne durchlässt.

Der HF-Abschluss H kann während der Wartezeit bzw. nach dem Einschalten der Sendestufe bereits an die Tx-Leitung geschaltet werden. Jedenfalls ist er immer dann an die Tx-Leitung zu schalten, wenn der Antennenschalter in Position 1 ist. Mit dem Durchschalten des Sendesignals wird der HF-Abschluss H wieder weggeschaltet. Dabei können für den HF-Abschluss H und den eigentlichen Antennenschalter bzw. das Schaltelement SD separate Steueranschlüsse oder ein gemeinsamer Steueranschluss vorgesehen werden.

Bei der in FIG 2 vorgestellten Lösung ist die notwendige Entkopplung (Funktion des Antennenschalters) mit der externen Dämpfung kombiniert. Mit einer adäquaten Auswahl des Antennenschalters und der oben dargestellten zeitlichen Reihenfolge beim Einschalten des Sendebetriebs kann man somit eine kostengünstige und platzsparende Lösung des Einschaltproblems des Power Amplifiers erreichen.

Als spezieller Anwendungsfall wäre ein leistungsschwacher Sender (Short Range Device) für die Installationstechnik denkbar, dessen Leistungsbereich im Mikro- oder Milliwatt-Bereich liegt.

## Patentansprüche

1. Vorrichtung zur Signalübertragung mit
- einer Sendeeinrichtung (T), die einen Voltage Controlled Oscillator aufweist, zum Senden von Signalen und zur Ausgabe einer Sendestartinformation zu Beginn eines Sendebetriebs,
- einem Leistungsverstärker zur Leistungsverstärkung eines Sendesignals und
- einer Antenne (A),
**gekennzeichnet durch**
- eine Dämpfungseinheit (SD), zwischen dem Leistungsverstärker und der Antenne (A), deren Dämpfung in Abhängigkeit der Sendestartinformation für eine vorbestimmte Zeitdauer einschaltbar ist, wobei
- die Zeitdauer ausreicht, um die **durch** die Einschaltstörungen des Leistungsverstärkers verursachte ungünstige Beeinflussung des Voltage Controlled Oscillators abklingen zu lassen.

2. Vorrichtung nach Anspruch 1, wobei die Sendeeinrichtung (T) auch zum Empfangen von Signalen ausgelegt ist.

3. Vorrichtung nach Anspruch 2, die weiterhin eine Schalteinrichtung aufweist, welche mit der Sendeeinrichtung (T) jeweils über einen Sendezweig (Tx) und einen Empfangszweig (Rx) verbunden ist, wobei die Schalteinrichtung ihren Ausgang an den Sendezweig (Tx) oder Empfangszweig (Rx) schaltet.

4. Vorrichtung nach einem der vorhergehenden Ansprüche, wobei die Dämpfungseinheit (SD) in die Schalteinrichtung integriert ist.

5. Vorrichtung nach einem der vorhergehenden Ansprüche, wobei an die Sendeeinrichtung (T) ein zuschaltbares HF-Abschlusselement (H) angeschlossen ist.

6. Vorrichtung nach Anspruch 5, wobei die Schalteinrichtung und das HF-Abschlusselement (H) einen gemeinsamen Steueranschluss besitzen.

7. Verfahren zur Signalübertragung durch
- Ausgeben einer Sendestartinformation zu Beginn eines Sendebetriebs,
- Senden eines Sendesignals durch eine Sendeeinrichtung (T) , die einen Voltage Controlled Oscillator aufweist, und
- Verstärken des Sendesignals durch einen Leistungsverstärker
**gekennzeichnet durch**
- Dämpfen des Sendesignals nach dem Verstärken **durch** eine Dämpfungseinheit (SD) in Abhängigkeit von der Sendestartinformation für eine vorbestimmte erste Zeitdauer, wobei
- die Zeitdauer ausreicht, um die **durch** die Einschaltstörungen des Leistungsverstärkers verursachte ungünstige Beeinflussung des Voltage Controlled Oscillators abklingen zu lassen.

8. Verfahren nach Anspruch 7, wobei der Sendebetrieb nach dem Ausgeben der Sendestartinformation in nachstehender Reihenfolge vorbereitet wird:
- Anschalten der Dämpfungseinheit (SD),
- Einschalten eines Sendefrequenzgenerators,
- Einschalten einer Ausgangsstufe der Sendeeinrichtung (T), sobald die Sendefrequenz des Sendefrequenzgenerators stabil ist oder nach einer vorbestimmten zweiten Zeitdauer und
- Abschalten der Dämpfungseinheit (SD) nach der vorbestimmten ersten Zeitdauer.

9. Verfahren nach Anspruch 7 oder 8, wobei an den Ausgang der Sendeeinrichtung (T) vor deren Einschalten ein HF-Abschluss (H) geschaltet wird.

## Claims

1. Device for signal transmission with
- a transmit unit (T), which features a Voltage Controlled Oscillator for transmission of signals and for output of transmission start information at the start of transmit operation,
- a power amplifier for amplifying the power of a transmit signal and
- an antenna (A),
**characterized by**
- an attenuation unit (SD), between the power amplifier and the antenna (A), of which the attenuation can be switched on for a predetermined period as a function of the start-of-transmission information, with
- the period being sufficient to allow the unfavourable effects on the Voltage Controlled Oscillator caused by the inrush faults of the power amplifier to decay.

2. Device according to claim 1, with the transmit unit (T) also being designed for receiving signals.

3. Device according to claim 2, which further features a switching device which is connected to the transmit unit (T) via a transmit branch (Tx) and a receive branch (Rx) respectively, with the switching device switching its output to the transmit branch (Tx) or the receive branch (Rx).

4. Device according to one of the previous claims, with the attenuation device (SD) being integrated into the switching device.

5. Device according to one of the previous claims, with a switchable HF termination element (H) being connected to the transmit unit (T).

6. Device according to claim 5, with the switching device and the HF termination element (H) having a common control connection.

7. Method for signal transmission by
- outputting start-of-transmission information at the start of a transmit operation,
- transmission of a transmit signal by a transmit unit which features a Voltage Controlled Oscillator, and
- amplification of the transmit signal by a power amplifier
**characterized by**
- attenuation of the transmit signal after amplification by an attenuation unit (SD) as a function of the start-of-transmission information for a predetermined first period, with
- the period being sufficient to allow the unfavourable effects on the Voltage Controlled Oscillator caused by the inrush faults of the power amplifier to decay.

8. Method according to claim 7, with transmit operation being prepared in the following sequence after output of the start-of-transmission information:
- Switching on the attenuation unit (SD),
- Switching on a transmit frequency generator,
- Switching on an output stage of the transmit device (T) as soon as the transmit frequency of the transmit frequency generator is started or after a predetermined second period and
- Switching off the attenuation unit (SD) after the predetermined first period.

9. Method according to claim 7 or 8, with an HF termination (H) being connected to the output of the transmit unit (T) before it is switched on.

## Revendications

1. Dispositif pour la transmission de signaux, comprenant
- un dispositif d'émission (T), qui présente un oscillateur commandé par tension, pour l'émission de signaux et pour la sortie d'une information de démarrage d'émission au début d'un mode d'émission,
- un amplificateur de puissance pour l'amplification de puissance d'un signal d'émission et
- une antenne (A),
**caractérisé par**
- une unité d'amortissement (SD), entre l'amplificateur de puissance et l'antenne (A), dont l'amortissement peut être enclenché en fonction de l'information de démarrage d'émission pour une durée prédéfinie,
- la durée étant suffisante pour faire disparaitre l'influence défavorable sur l'oscillateur commandé par tension qui est provoquée par les parasites d'enclenchement de l'amplificateur de puissance.

2. Dispositif selon la revendication 1, le dispositif d'émission (T) étant conçu également pour la réception de signaux.

3. Dispositif selon la revendication 2, qui présente également un dispositif de commutation, lequel est relié au dispositif d'émission (T) respectivement par une branche d'émission (Tx) et une branche de réception (Rx), le dispositif de commutation commutant sa sortie sur la branche d'émission (Tx) ou la branche de réception (Rx).

4. Dispositif selon l'une quelconque des revendications précédentes, l'unité d'amortissement (SD) étant intégrée dans le dispositif de commutation.

5. Dispositif selon l'une quelconque des revendications précédentes, un élément de terminaison à haute fréquence (H) pouvant être mis en circuit étant raccordé au dispositif d'émission (T).

6. Dispositif selon la revendication 5, le dispositif de commutation et l'élément de terminaison à haute fréquence (H) présentant un raccordement de commande commun.

7. Procédé pour la transmission de signaux par
- délivrance d'une information de démarrage d'émission au début d'un mode d'émission,
- émission d'un signal d'émission par un dispositif d'émission (T), qui présente un oscillateur commandé par tension, et
- amplification du signal d'émission par un amplificateur de puissance
**caractérisé par**
- l'amortissement du signal d'émission après l'amplification par une unité d'amortissement (SD) en fonction de l'information de démarrage d'émission pour une première durée prédéfinie,
- la durée étant suffisante pour faire disparaitre l'influence défavorable sur l'oscillateur contrôlé par tension, qui est provoquée par les parasites d'enclenchement de l'amplificateur de puissance.

8. Procédé selon la revendication 7, le mode d'émission étant préparé dans l'ordre mentionné ci-dessous après la sortie de l'information de démarrage d'émission :
- rattachement de l'unité d'amortissement (SD),
- enclenchement d'un générateur de fréquence d'émission,
- enclenchement d'un étage de sortie du dispositif d'émission (T) dès que la fréquence d'émission du générateur de fréquence d'émission est stable ou après une seconde durée prédéfinie, et
- déconnexion de l'unité d'amortissement (SD) après la première durée prédéfinie.

9. Procédé selon la revendication 7 ou 8, une terminaison à haute fréquence (H) étant commutée sur la sortie du dispositif d'émission (T) avant son enclenchement.
